# EUROPÄISCHE PATENTANMELDUNG

(11) **EP 2 098 933 A1**
(43) Veröffentlichungstag der Anmeldung: **09.09.2009**
(21) Anmeldenummer: 09005299.4
(22) Anmeldetag: 09.02.2007
(51) Int. Cl.: G05B 19/418, B25J 9/16

(54) **Verfahren und Vorrichtung zur vollautomatischen Endkontrolle von Bauteilen und/oder deren Funktionseinheiten**

(30) Priorität: 10.02.2006 DE 102006006246
(62) Teilanmeldung aus: 07711495.7
(71) Anmelder: Battenberg, Günther, 35043 Marburg (DE)
(72) Erfinder: Battenberg, Günther, 35043 Marburg (DE)
(74) Vertreter: Buchhold, Jürgen

(57) **Zusammenfassung**

Der Gegenstand der vorliegende Erfindung betrifft ein System (1) und ein Verfahren zur vollautomatischen Endkontrolle von Bauteilen (2), insbesondere deren betätigbaren Funktionseinheiten, mit einem Roboter (3) umfassend eine Prüfvorrichtung (8) zum Durchführen der Endkontrolle, umfassend die Schritte: selbsttätiges Ausrichten des Roboters (3) und/oder der Prüfvorrichtung (8) zu dem zu prüfenden Bauteil (2) und/oder dessen Funktionseinheit anhand von Orientierungsdaten, reproduzierbares Durchführen von Einzelkontrollen mittels der Prüfvorrichtung (8), wobei die Schritte selbsttätiges Ausrichten und reproduzierbares Durchführen wiederholt werden, bis ein Abbruchskriterium erfüllt und/oder die Endkontrolle komplett durchgeführt ist.

## Beschreibung

Die vorliegende Erfindung betrifft ein Verfahren und ein System zur vollautomatischen Endkontrolle von Bauteilen.

In Produktionsprozessen werden komplexe Produkte meist arbeitsteilig durch Produktion von Untergruppen, insbesondere Bauteilen, Funktionseinheiten und dergleichen, welche in zum Teil unabhängigen Produktionsschritten gefertigt werden, hergestellt, wobei die Untergruppen, Bauteile etc. modular ausgebildet sind und zu dem fertigen Endprodukt zusammengesetzt werden. Dabei werden die Bauteile in der Regel in eine die modularen Bauteile aufnehmende Raumstruktur wie zum Beispiel ein Gehäuse, eine Rahmenstruktur und dergleichen eingefügt.

Aufgrund von Fertigungs-, Montage- und/oder sonstigen Toleranzen oder Abweichungen von einem vorgegeben Sollwert können die Bauteile in Bezug auf die Raumstruktur abweichend von einer Sollposition angeordnet sein. Bei komplexen und umfangreichen Produkten mit einer Vielzahl von Untergruppen und/oder Bauteilen, welche in einer Raumstruktur angeordnet werden sollen, kann es aufgrund der Toleranzen, die sich beispielsweise nach Art einer Fehlerfortpflanzung aufaddieren oder gar potenzieren, bei der Endmontage der Bauteile in die Raumstruktur zu Problemen kommen, beispielsweise so, dass Bauteile nicht mehr in die Raumstruktur eingefügt werden können, da aufgrund sich addierender Toleranzfehler nicht genug Bauraum zur Verfügung steht.

Oft weisen die Bauteile selbst noch weitere Unterbauteile oder Funktionseinheiten auf, wobei auch diese aufgrund von Unregelmäßigkeiten in der Fertigung fehlerhaft ausgebildet sein können. So kann es passieren, dass zwar das Bauteil in die Raumstruktur fehlerfrei eingefügt ist, die Funktionseinheit des Bauteils aber selbst fehlerhaft ist.

Darüber hinaus sind eine Vielzahl von fehlerhaften Anordnung, Ausbildungen und dergleichen vorstellbar, welche in dem Endprodukt vermieden werden sollen.

Um möglichst einwandfreie Endprodukte, bestehend aus mindestens einer Untergruppe oder einem Bauteil, angeordnet in einer Raumstruktur, zu garantieren, ist es bekannt, das Endprodukt manuell durch speziell ausgebildete Prüfpersonen prüfen und abnehmen zu lassen. Insbesondere die Prüfung der betätigbaren Funktionseinheiten wird manuell durchgeführt, da es bei dem Kunden sehr auf die persönliche Wahrnehmung ankommt und eine entsprechende angenehme Wahrnehmung des Kunden nur durch manuelle Prüfung und nicht bei einer maschinell durchgeführten Prüfung garantiert werden konnte.

Insbesondere bei sehr komplexen Endprodukten mit einer Vielzahl von Baugruppen, beispielsweise bei einem Kraftfahrzeug, sind extrem viele Prüfungen durchzuführen, welche sehr zeit- und arbeitsintensiv sind. Zudem ist die manuelle Prüfung schwerlich reproduzierbar ausführbar und hängt sehr von den persönlichen Eigenschaften des Prüfpersonals ab.

Ziel der Erfindung ist es, ein Verfahren und ein System zur vollautomatischen Endkontrolle von Bauteilen und/oder Funktionseinheiten zu schaffen, welche insbesondere in einer Raumstruktur angeordnet sind. Des Weiteren sollen Sensoren zum Einsatz in einem Verfahren und/oder einem System zur vollautomatischen Endkontrolle geschaffen werden.

Diese Aufgabe wird gelöst durch ein Verfahren gemäß Anspruch 1 und einem System gemäß Anspruch 36. Zudem wird die Aufgabe durch ein Computerprogramm sowie ein Computerprogrammprodukt gemäß Anspruch 34 bzw. 35 gelöst. Die Aufgabe wird weiter durch einen Sensor gemäß Anspruch 46 gelöst. Weiterführende Ausgestaltungen und vorteilhafte Weiterentwicklungen sind in den hiervon abhängigen Ansprüchen angegeben.

Die Erfindung schließt die technische Lehre ein, dass ein Verfahren zur vollautomatischen Endkontrolle von Bauteilen, insbesondere deren betätigbaren Funktionseinheiten, mit einem Roboter umfassend eine Prüfvorrichtung zum Durchführen der Endkontrolle die Schritte umfasst sind: selbsttätiges Ausrichten des Roboters und/oder der Prüfvorrichtung zu dem zu prüfenden Bauteil und/oder dessen Funktionseinheit anhand von Orientierungsdaten, reproduzierbares Durchführen von Einzelkontrollen mittels der Prüfvorrichtung, wobei die Schritte selbsttätiges Ausrichten und reproduzierbares Durchführen wiederholt werden, bis ein Abbruchkriterium erfüllt und/oder die Endkontrolle komplett durchgeführt ist.

Durch diese vollautomatische Endkontrolle ist es möglich, die Endkontrolle reproduzierbar und mit gleich bleibender Qualität nach bestimmten, immer gleichen Vorgaben durchzuführen.

Ein Bauteil kann dabei jedes beliebige Teil sein, welches beispielsweise in eine Raumstruktur eingesetzt werden kann. Die Bauteile können bevorzugt serienmäßig hergestellt sein. Insbesondere können die Bauteile schon vor Anordnung in einer Raumstruktur geprüft werden, beispielsweise auf einem Produktionsband oder dergleichen. Dabei ist auch eine Endkontrolle der Bauteile vollautomatisch möglich, wenn die Bauteile in unterschiedlichen Positionen und Orientierungen beispielsweise auf dem Produktionsband angeordnet sind. Bauteile können auch alle in einem Kraftfahrzeug insbesondere an dessen Cockpit vorfindbaren Bauteile wie Autoradio, Schalthebel, Lenkrad, Navigationssystem, Klimaanlage und dergleichen sein. Dabei weisen die Bauteile auch verschiedene Funktionseinheiten wie Schalter, Bedienelemente, Regler, Anzeigen und dergleichen auf.

Um die vollautomatische Endkontrolle durchzuführen ist bevorzugt ein Roboterarm einsetzbar, der vorteilhafter Weise eine Prüfvorrichtung aufweist.

Der Roboter setzt in einem ersten Schritt das selbsttätige Ausrichten um. Hierdurch wird der Roboter, dessen Roboterarm und insbesondere die Prüfvorrichtung ausgerichtet. Um dieses Ausrichten durchführen zu können, weist der Roboter weiter eine Sensoreinheit zur Erfassung von Orientierungsdaten auf. Mit dieser Sensoreinheit erfasst der Roboter sowohl Informationen über die eigene Position als auch Informationen über die Position der Prüfvorrichtung. Die Sensoreinheit kann in Form eines Gyroskops oder eines Kraft-Moment-Sensors ausgebildet sein. Die Orientierungsdaten umfassen insbesondere Lage-und oder Rotationsinformationen, die sich über zumindest einen der Vektoren und/oder Richtungen entlang und/oder um eine x-Achse, entlang und/oder um eine y-Achse und/oder entlang und/oder um eine z-Achse darstellen lassen. Für die Orientierungsdatenerfassung kann also ein karthesisches Koordinatensystem verwendet werden, anhand dessen die Orientierungsdaten erfasst und/oder verarbeitet werden können. Jedoch ist auch jedes andere Koordinatensystem beilspielsweise mittels Zylinder und oder Polarkoordinaten sowie transformierte Koordinatensysteme verwendbar.

Dabei wird für die Verarbeitung von Orientierungsdaten ein festes Koordinatensystem zugrunde gelegt, welches beispielsweise anhand einer Raumstruktur ausgewählt ist. Die Bauteile und/oder deren Anordnung im Raum sowie deren gedrehte Position im Raum können dann in Bezug auf dieses feste Koordinatensystem erfasst, abgelegt und oder berechnet werden.

Orientierungsdaten umfassen somit alle Informationen, welche Auskunft über die Anordnung eines Bauteils, einer Raumstruktur, einer Funktionseinheit und dergleichen in einem Raum, bevorzugt einem dreidimensionalen Raum geben.

Das reproduzierbare Durchführen einer Einzelkontrolle wird mittels der Prüfvorrichtung durchgeführt.

Um das gesamte Endprodukt einer Endkontrolle zu unterziehen, werden die Einzelkontrollen und falls notwendige auch die Ausrichtungen solange und wiederholt durchgeführt, bis die Endkontrolle abgeschlossen ist oder ein beliebiges Abbruchkriterium erfüllt ist. Abbruchkriterien können auch manuell eingegeben werden.

Es ist weiter bevorzugt, dass der Schritt Erfassen, Speichern und/oder Abrufen von Orientierungsdaten des Roboters, der Prüfvorrichtung, des Bauteils und/oder dessen Funktionseinheiten umfasst ist.

Die Orientierungsdaten, die Informationen über die jeweilige Anordnung und/oder Rotation im dreidimensionalen Raum beinhalten, können selbsttätig von dem Roboter über dessen Sensoreinrichtung erfasst werden. Diese lassen sich dann Speichern oder in einem Speicher ablegen, um diese beispielsweise später wieder abzurufen oder hinsichtlich einer Optimierung weiter zu verarbeiten.

Es lassen sich jedoch auch Orientierungsdaten vorgeben. So liegen heute viele Informationen von Bauteilen, Raumstrukturen und dergleichen in Modellform, beispielsweise als CAD-Daten und dergleichen vor. Hieraus lassen sich ebenfalls Orientierungsdaten an den Roboter bzw. dessen Steuerung übertragen. Diese zuvor als beispielsweise CAD-Daten abgelegten Orientierungsdaten können zum Beispiel als Sollvorgaben abgelegt werden und bieten eine erste Positionsbestimmung für den Roboter.

Die vorgegebenen und abgerufenen Orientierungsdaten können vorzugsweise mit den erfassten Orientierungsdaten verglichen werden und anhand von Berechnungsalgorithmen optimiert werden, um Arbeitsabläufe insbesondere die Prüfungsdurchführung zu optimieren.

Bevorzugt ist, dass die Daten ständig optimiert werden und/oder dass der Schritt selbsttätiges Ausrichten weiter den Schritt umfasst: Verfahren zumindest eines Roboterarms des Roboters und/oder der Prüfvorrichtung zu erfassten und/oder abgerufenen Orientierungsdaten. Insbesondere bei optimierten Orientierungsdaten lässt sich der Roboterarm schnell und zuverlässig Positionieren, so dass eine schnelle Prüfung bzw. Endkontrolle gewährleistet werden kann. Insbesondere lässt sich so eine maschinelle Endkontrolle durchführen.

Darüber hinaus ist es bevorzugt, dass der Schritt Erfassen und/oder Speichern von Orientierungsdaten des Roboters, der Prüfvorrichtung, des Bauteils und/oder dessen Funktionseinheiten den Schritt umfasst: Erfassen und/oder Speichern von Orientierungsdaten des Roboters, der Prüfvorrichtung, des Bauteils und/oder dessen Funktionseinheiten in Bezug auf vorgegebene Orientierungsdaten.

Legt man ein festes Koordinatensystem für die Ansteuerung des Roboters fest, so lassen sich alle Raumstrukturen, Bauteile etc. relativ zu diesem Koordinatensystem erfassen, speichern und/oder abrufen. Dies hat den Vorteil, dass man bei einem Versatz oder einer Verschiebung des festgelegten Koordinatensystems die dazu gewonnenen Orientierungsdaten weiter verwenden.

Eine bevorzugte Ausführungsform sieht vor, dass der Schritt selbsttätiges Ausrichten weiter den Schritt umfasst. Berechnung der Informationen über die mit der Prüfvorrichtung anzufahrende Position für die reproduzierbare Durchführung der Endkontrolle. Aufgrund der Berechnung der anzufahrenden Position vor jeder Einzelkontrolle ist eine stets optimierte und adaptive Durchführung der Einzelkontrolle auch bei veränderten Situationen wie fehlenden oder zusätzlichen Eigenschaften des zu prüfenden Bauteils und dergleichen möglich. Es erfolgt somit eine ständige Neuberechnung von Informationen, welche verschiedene und oft wechselnde Einbausituationen berücksichtigen.

Weiter ist bevorzugt, dass der Schritt Berechnung der Information über die mit der Prüfvorrichtung anzufahrende Position weiter den Schritt umfasst: Berechnung der Information über die mit der Prüfvorrichtung anzufahrende Position anhand eines Lageerkennungsalgorithmus. Hierdurch können bekannte und hinsichtlich Zuverlässigkeit erprobte Algorithmen verwendet werden, die beispielsweise auch als Software vorliegen, so dass die Verfahren leicht adaptierbar und ausreichend verfügbar sind, und so auch zu bestehenden Steuerungen kompatibel sind. Als ein Beispiel eines Lageerkennungsalgorithmus kann hier ein Algorithmus nach dem Triangulationsprinzip verwendet werden. Somit sieht eine weitere vorteilhafte Ausgestaltung der Erfindung vor, dass der Schritt Berechnung der Information über die mit der Prüfvorrichtung anzufahrende Position anhand eines Lageerkennungsalgorithmus weiter den Schritt umfasst: Berechnung der Information über die mit der Prüfvorrichtung anzufahrende Position anhand eines Lageerkennungsalgorithmus nach dem Prinzip des Triangulationsverfahrens.

Bevorzugt ist zudem, dass der Schritt reproduzierbares Durchführen weiter den Schritt umfasst: Berechnen, Erfassen, Speichern und/oder Abrufen der Informationen über das zu prüfende Bauteil oder dessen Funktionseinheit einschließlich der Prüfungsinformationen für die durchzuführende Prüfung. Für die Prüfung reicht es nicht aus, lediglich die Orientierungsdaten des zu prüfenden Bauteils zu kennen. Insbesondere sind weitere, speziell für die Prüfung notwendige Daten notwendig. So muss die Prüfung für einen Schalter anders durchgeführt werden als beispielsweise für ein Display. Zudem können andere Kräfte und/oder Bewegungen für verschiedene Schalter notwendig sein. Insbesondere bei Schaltern mit mehreren Funktionen, die beispielsweise über ein Drehen oder ein Drücken oder beides abgerufen werden können, müssen auch alle Funktionen kontrolliert werden. Hierfür ist es erforderlich, diese Informationen an den Roboter zu übertragen.

Somit ist es vorteilhaft, dass der Schritt reproduzierbares Durchführen weiter den Schritt umfasst: Durchführung einer Einzelkontrolle anhand der Prüfungsinformationen. Somit kann für jede einzelne zu prüfende Einheit eine individuelle Prüfung erfolgen, was eine maximale Qualitätskontrolle gewährleistet.
Um eine qualitativ hochwertige Endkontrolle zu gewährleisten ist es weiter vorteilhaft, dass der Schritt reproduzierbares Durchführen weiter den Schritt umfasst: Erfassen mindestens einer Information über das Feedback auf die Durchführung der Einzelkontrolle. So lässt sich über das gewonnene Feedback eine Beurteilung der Kontrolle gewinnen. Die Beurteilung kann dabei binärer oder digitaler Art sein, etwa nach der Art "Funktionseinheit funktioniert" - "Funktionseinheit funktioniert nicht", und/oder aber auch quantitativer Art. Die quantitative Beurteilung ermöglicht das Einordnen von Bauteilen in bestimmte "Güteklassen". So lassen sich dann Bauteile, die einer qualitativ hochwertigen Güteklasse angehören, entsprechend in ein hochwertiges Endprodukt einfügen oder als hochwertiges Endprodukt einstufen und ein qualitativ weniger hochwertiges Bauteil in einem entsprechend weniger hochwertigem Endprodukt verwenden. Auf diese Weise ist eine ökonomischere Nutzung von Bauteilen möglich.

Die Informationen können alle mittels Programmierung vorgegeben sein, oder automatisch erfasst werden. Oftmals ist aber ein Programmierung oder eine automatische Erfassung sehr aufwendig und/oder zeitintensiv.

Aus diesem Grunde ist es in manchen Fällen vorteilhaft, dass die Informationen für das Verfahren einschließlich der Orientierungsdaten des zu prüfenden Bauteils und/oder deren betätigbarer Funktionseinheit und/oder der Prüfungsinformationen in einem Teachingverfahren gewonnen werden. Hierbei verfährt man den Roboter und/oder die Prüfvorrichtung manuell entlang der oder mit den gewünschten Orientierungsdaten. Hierdurch können auf einfache Weise benötigte Informationen ohne spezielle Kenntnisse in der Programmierung gewonnen werden. Der Roboter verarbeitet die mittels Teachingverfahren gewonnen Informationen entsprechend und setzt diese dann um.

Der Roboter kann nicht nur manuell verfahren werden. Auch ist es möglich, die Prüfung manuell durchzuführen, so dass der Roboter auch die Prüfinformationen entsprechend erhalten kann.

Das Teachingverfahren kann mittels manuellem Handhaben des Roboters erfolgen. Ein besondere Ausgestaltung der Erfindung sieht vor, dass das Teachingverfahren die Schritte umfasst: manuelles Führen und/oder Handhaben des Roboters und/oder der Prüfvorrichtung durch Bewegen/Handhaben eines Messsensors der Prüfvorrichtung, Erfassen der Informationen über das manuelle Führen und abrufbares Ablegen der erfassten Informationen über das manuelle Führen. Insbesondere durch das Handhaben des Messsensors bzw. der vordersten Spitze des Roboters oder genauer der Prüfvorrichtung ist eine sehr präzise Informationsgewinnung mittels des Teachingsverfahrens möglich. Zudem ist das Handhaben sehr genau und der Test und/oder die Kontrolle kann unter realen Bedingungen durchgeführt werden. Somit kann auf mehrere Teaching-Durchläufe aufgrund von ungenauer oder fehlerhafter Handhabung verzichtet werden.

Obwohl das Teachingverfahren durch Handhaben der vorderen Spitze bzw. des Messsensors sehr zuverlässige Informationen liefert, können diese für die maschinelle Durchführung der Endkontrolle weiter verbessert werden. So ist es vorteilhaft, dass das Teachingverfahren weiter den Schritt umfasst: Optimierung der erfassten Informationen. Die Optimierung kann beispielsweise hinsichtlich der Verfahrweglänge, der Zeit, der Rotationen und oder der Anzahl der Richtungsänderung und/oder Arbeitsschritte erfolgen.

Wie zuvor ausgeführt ist es vorteilhaft, dass das Teachingverfahren weiter die Schritte umfasst: manuelles Durchführen der Einzelkontrolle mittels der Prüfvorrichtung, Erfassen der Informationen über das Durchführen der Einzelkontrolle, abrufbares Speichern der erfassten Informationen über die Durchführung der Einzelkontrolle. Auf diese Weise lässt sich eine optimierte Endkontrolle mittels geringen Programmieraufwands gewährleisten.

Das Verfahren zur vollautomatischen Endkontrolle lässt sich vorteilhafter Weise an einer Produktionslinie einer getakteten Produktionsstraße durchführen. Hierbei kann die Endkontrolle auch schon während der Produktion, zum Beispiel unmittelbar nach dem Einbau eines Bauteils durchgeführt werden. Ein typisches Beispiel für die Verwendung des Verfahrens kann eine Kraftfahrzeugfertigungslinie sein, bei der die fertig gestellten Kraftfahrzeuge einer vollautomatischen Endkontrolle unterzogen werden.

Insbesondere können das zu prüfende Bauteil und/oder dessen Funktionseinheit und der Roboter in unterschiedlichen, abgegrenzten, über eine Zugangsstelle verbundenen Raumstrukturen angeordnet sein, bevor das Verfahren durchgeführt wird. Hierbei muss der Roboter bzw. dessen Prüfvorrichtung entsprechend in die andere Raumstruktur bewegt werden. Ein Beispiel für die verschiedenen Raumstrukturen kann die zuvor ausgeführte Kraftfahrzeugproduktionslinie, insbesondere das Innere und das Äußere eines fertig gestellten Kraftfahrzeugs sein. Der Roboter ist dabei außerhalb des Kraftfahrzeugs angeordnet und die Bauteile sind in das Kraftfahrzeug eingefügt. Um nun die Endkontrolle durchzuführen, muss der Roboter bzw. die Prüfvorrichtung, welche insbesondere an einem äußeren Ende eines Roboterarms des Roboters angeordnet sein kann, in das Kraftfahrzeug, das heißt die andere Raumstruktur, verfahren werden.

Wie erwähnt, sieht eine bevorzugte Ausführungsform vor, dass eine Raumstruktur, in der das zu prüfende Bauteil und/oder dessen Funktionseinheit angeordnet ist, ein Kraftfahrzeug ist. Das Verfahren in die andere Raumstruktur oder das Kraftfahrzeug erfolgt über eine Zugangsstelle, die unterschiedliche Geometrien aufweisen kann und insbesondere unterschiedlich groß ausgebildet sein kann.

Deshalb umfasst das Verfahren bevorzugt die Schritte: Auffinden einer Zugangsstelle und Verfahren des Roboters und/oder der Prüfvorrichtung durch die Zugangsstelle, wobei die Schritte Auffinden und Verfahren vor dem Schritt selbsttätiges Ausrichten durchgeführt werden. Somit kann, wenn beispielsweise die Zugangsstelle nach der Endmontage verschlossen ist, das Verfahren durch den Auffindalgorithmus trotzdem zuverlässig und fehlerfrei durchgeführt werden. In dem Fall, dass eine Raumstruktur ein Kraftfahrzeug ist, kann eine Kraftfahrzeugtür, der Kofferraum und dergleichen die Zugangsstelle das die Zugangsstelle verschließende Teil bilden. Genauer bildet der durch die beweglichen Teile der Außenkarosserie benachbart zum Innenraum oder zu Raum, in dem das zu prüfende Teil angeordnet ist, verschlossene Bereich die Zugangsstelle. Um nun die Endkontrolle vollautomatisch durchzuführen, muss beispielsweise der Roboterarm die Tür, den Kofferraum, die Motorraumklappe und dergleichen auffinden, diese Öffnen und somit die Zugangsstelle zugänglich machen. Nach diesem Schritt kann der Roboter in die andere Raumstruktur verfahren und das Verfahren weiter ausführen.

Deshalb sieht eine vorteilhafte Ausgestaltung der Erfindung vor, dass das Verfahren weiter die Schritte umfasst. Erfassen der Zugangsstelle und Öffnen der Zugangsstelle, wobei der Schritt Öffnen der Zugangsstelle vor dem Schritt Verfahren des Roboters durch die Zugangsstelle ausgeführt wird.

Noch eine weitere vorteilhafte Ausgestaltung sieht vor, dass der Schritt Verfahren des Roboters mittels Verfahren auf mindestens einer linearen Verfahrachse durchgeführt wird. Somit kann der Roboter, der die Endkontrolle durchführt beliebig linear verfahren werden, was eine leichte Ansteuerung ermöglicht. Insbesondere bei Anordnung der Bauteile und des Roboters in unterschiedlichen Raumstrukturen kann der Roboter wegoptimiert außerhalb der Raumstruktur, in der das zu prüfende Bauteil angeordnet ist, verfahren werden und insbesondere bei mehreren Zugangsstellen die optimale Zugangsstelle angefahren werden. Natürlich ist auch jedes andere Verfahrsystem zur Bewegung eines Roboters möglich, beispielsweise entlang einer Kreisbahn oder eins 3D-Schienensystems.

Um die Endkontrolle in möglichst vielen Einsatzgebieten durchzuführen ist es bevorzugt, dass das Verfahren zusätzlich zu dem Schritt Erfassen, Speichern und/oder Abrufen des Bauteils das mehrdimensionale Erfassen, Speichern und/oder Abrufen des Bauteils, umfassend Bauteile mit Freiformflächen, umfasst. Auf diese Weise können selbst komplexe und regelmäßig schwer zu kontrollierende Freiformflächen vollautomatisch kontrolliert werden.

Eine vorteilhafte Ausgestaltung der Erfindung sieht weiter vor, dass das Erfassen des Bauteils mittels einer Dreipunktmessung durchgeführt wird, wobei die Dreipunktmessung auch die Dreipunktmessung in mehr als einer Ebene nach Art eines Triangulationsverfahrens umfasst.

Insbesondere werden beim Erfassen, Speichern und/oder Abrufen der Informationen Informationen verarbeitet, ausgewählt aus der Gruppe der optischen, akustischen, elektrischen, elektronischen und/oder haptischen Informationen, Somit werden die für den Kunden relevanten und kaufentscheidenden Kriterien verarbeitet.

Bevorzugt ist, dass beim Erfassen der optischen Informationen Informationen erfasst werden, ausgewählt aus der Gruppe umfassend Beleuchtungsinformationen, Symbolinformationen, Pixelinformationen, Geometrieinformationen, Spaltmaßinformationen, Farbinformationen, Lichtreflexionsinformationen, Bündigkeitsinformationen, Glanzgradinformationen, Körnungsabstimmungsinformation und dergleichen.

Weiter bevorzugt ist, dass beim Erfassen der haptischen Informationen Information erfasst werden, ausgewählt aus der Gruppe umfassend Elastizitätsinformationen, Steifigkeitsinformationen, Rückstellrateninformationen. Reibungsinformationen, Rauhigkeitsinformationen, topografische Informationen, gefühlte Temperaturinformationen. Härte, Kraftprofilinformationen, Drehmomentinformationen, stereotype Bedienungsinformation und dergleichen.

Darüber hinaus ist es bevorzugt, dass beim Erfassen der akustischen Informationen Informationen erfasst werden, ausgewählt aus der Gruppe umfassend: Klickgeräuschinformationen, Anschlagsinformationen, Betriebsgeräuschinformationen, Klanginformationen und dergleichen.

Eine vorteilhafte Ausgestaltung der Erfindung sieht vor, dass das optische Erfassen mit einer Auflösung in einem Bereich von größer gleich 0 µm bis kleiner gleich 10 µm, bevorzugt in einem Bereich von größer gleich 0 µm bis kleiner gleich 5 µm und am meisten bevorzugt in einem Bereich von 0 µm bis kleiner gleich 1 µm durchgeführt wird. Diese hohe Auflösung sichert einen hohen Qualitätsstandart.

Gleiche gilt für das bevorzugte Ausführungsbeispiel, bei dem das haptische Erfassen in einem Temperaturbereich mit einer Auflösung in einem Bereich von größer gleich 0°C bis kleiner gleich 10 °C, bevorzugt in einem Bereich von größer gleich 0°C bis kleiner gleich 5°C und am meisten bevorzugt in einem Bereich von größer 0°C bis kleiner gleich 1°C und/oder das kräftemäßige Erfassen in einem Kraftgrößenbereich mit einer Auflösung in einem Bereich von größer gleich 0 N oder 0 Nm bis kleiner gleich 10 N oder 10 Nm, bevorzugt in einem Bereich von größer gleich 0 N oder 0 Nm bis kleiner gleich 5 N oder 5 Nm und am meisten bevorzugt in einem Bereich von größer gleich 0 N oder 0 Nm bis kleiner gleich 1 N oder 1 Nm durchgeführt wird.

Ebenso ist es vorteilhaft, dass das akustische Erfassen in einem Frequenzbereich mit einer Auflösung in einem Bereich von größer gleich 0 Hz bis kleiner gleich 150 kHz, bevorzugt in einem Bereich von größer gleich 0 Hz bis kleiner gleich 100 kHz, und am meisten bevorzugt in einem Bereich von größer gleich 0 Hz bis kleiner gleich k50 Hz, besonders bevorzugt um 44,1 kHz durchgeführt wird.

Besonders bevorzugt ist es, um einen hohen Qualitätsstandart zu gewährleisten, dass zumindest einer der Schritte mehrfach ausgeführt wird, um die Präzision des Schritts zu erhöhen, bis ein Abbruchkriterium erfüllt ist. So kann iterativ die Präzision je nach Bedarf gesteigert werden, entweder für den gesamten Prozess oder nur für einzelne Kontrollen.

Aufgrund der hohen Taktraten und dem zunehmenden Zeitdruck ist es vorteilhaft, dass die Schritte selbsttätiges Ausrichten und reproduzierbares Durchführen einer Einzelkontrolle in einer Taktrate in einem Bereich von größer gleich 0 Sekunden bis kleiner gleich 3600 Sekunden, bevorzugt in einem Bereich von größer gleich 0 Sekunden bis kleiner gleich 1800 Sekunden und am meisten bevorzugt in einem Bereich von größer gleich 0 Sekunden bis kleiner gleich 900 Sekunden durchgeführt werden.

Zur Steigerung des Komforts der Bedienung des Programms, beispielsweise von Eingriffen, und zur Reduzierung von Kabel und anderen Übertragungsmedienmaterialien, ist es vorteilhaft, dass mindestens einer der Schritte akustisch über ein Spracherkennungs-und/oder -eingabesystem gesteuert wird. Somit kann ein Bediener beide Hände frei halten und gegebenenfalls andere Tätigkeiten damit verrichten, wenn er Anweisungen für den Roboter gibt. Dies erhöht die Effizienz des Verfahrens. Insbesondere bei Notfällen oder Störungen kann in die Steuerung auch über weitere Entfernungen eingegriffen werden.

Auch vorteilhaft ist es, dass bei mindestens einem Schritt die Informationen kabellos mittels eines kabellosen Verfahren ausgewählt aus der Gruppe umfassend WLAN, bluetooth und dergleichen ausgeführt wird. Dies reduziert den Materialaufwand und gestaltet die Übertragung, zum Beispiel auch an mehrere Stellen einfacher.

Die technische Lehre sieht weiter vor, dass Computerprogramm mit Programmcode-Mitteln vorgesehen sind, um alle Schritte von jedem beliebigen der vorbeschriebenen Verfahren durchzuführen, wenn das Programm auf einem Computer ausgeführt wird. Gleiches gilt für ein Computerprogrammprodukt mit Programmcode-Mitteln, die auf einem computerlesbaren Datenträger gespeichert sind, um ein beliebiges vorbeschriebenes Verfahren durchzuführen, wenn das Programmprodukt auf einem Computer ausgeführt wird. Somit kann das Verfahren einfach auf andere Systeme übertragen und dort ausgeführt werden.

Die technische Lehre der Erfindung sieht weiter vor, dass ein System mit Mitteln zur Durchführung des erfindungsgemäßen Verfahrens vorgesehen ist.

Auf diese Weise lässt sich das Verfahren auch praktisch in verschiedenen Gebieten einsetzen.

Wie schon vorstehend erwähnt, umfasst das System einen Roboter mit mindestens einem Lagesensor und mindestens eine Prüfvorrichtung. Unter Roboter ist hier jede Art von Manipulatoren, insbesondere die vollautomatischen Manipulatoren zu verstehen.

Bevorzugt ist, dass die Prüfvorrichtung mindestens eine Funktionstesteinheit und mindesten einen Sensor zur Erfassung des Feedbacks der Funktionstesteinheit umfasst. Somit können die an Bauteilen hinterlegten Funktionen automatisch kontrolliert werden, welche bislang nur manuell getestet werden konnten.

Weiter bevorzugt ist, dass mindestens einer der Sensoren als Mikrosensor ausgebildet ist. Auf diese Weise lässt sich die Prüfungsvorrichtung klein ausbilden, wobei der Mikrosensor aufgrund beispielsweise seines Gewichts die Kontrolle nur minimal beeinflusst.

Eine Ausführungsform sieht bevorzugt vor, dass der Mikrosensor Mittel zum Erfassen von Kraftgrößen umfassend Drehmoment und Kraft, thermischen Größen umfassend die Temperatur, optischen Größen und/oder haptischen Größen aufweist. Hiermit lassen sich alle relevanten Informationen für die vollautomatische Endkontrolle erfassen.

Darüber hinaus ist es vorteilhaft, dass die Mittel zum Erfassen der Kraftgrößen mindestens einen Piezo-Resistor zum Erfassen eines Drehmoments und/oder einer Kraft umfassen. Dieser liefert zuverlässige Ergebnisse und ist kleinbauend, wodurch Bauraum eingespart werden kann.

Bevorzugt ist, dass die Mittel zum Erfassen der thermischen Größe mindestens ein Thermoelement umfassen.

Ein weiterer Vorteil der Erfindung liegt darin, dass die Mittel zum Erfassen einer haptischen Größe eine Vielzahl an Rezeptoren umfassen, die nach Art eins haptischen Fingers fungieren. Somit werden die menschlichen haptischen Sinnesempfindungen optimal nachgebildet und es kann somit eine optimierte Endkontrolle durchgeführt werden.

Um möglichst viele Rezeptoren und somit dann auch viele Mikrosensoren auf einem kleinen Bauraum unterzubringen, ist es bevorzugt, dass die Vielzahl an Rezeptoren zum Erfassen der haptischen Größe auf einem Mikrosensor mit einer Grundfläche in einem Bereich von kleiner gleich 50 mm x 50 mm, bevorzugt in einem Bereich von kleiner gleich 25 mm x 25 mm und besonders von 15 mm x 15 mm angeordnet sind. Der Mikrosensor mit der Vielzahl an Rezeptoren weist einen Grundkörper auf, an oder in dem die Rezeptoren angeordnet sind. Der Grundkörper kann dabei beliebig geformt sein, weist bevorzugt in der Draufsicht jedoch eine rechteckige, bevorzugt quadratische Grundfläche auf. Je kleiner die Rezeptoren ausgebildet sind, desto kleiner kann auch der Grundkörper bzw. dessen Grundfläche sein.

Ein Vorteil der vorliegenden Erfindung sieht vor, dass mindestens ein Sensor als mehrachsiger Kraft-Moment-Sensor zur Erfassung von Kräften und Momenten in mindestens eine, bevorzugt in mehrere unterschiedliche Richtungen zum Erfassen von Orientierungsdaten ausgebildet ist. Zum Beispiel kann der Kraft-Moment-Sensor Kräfte und/oder Momente beziehungsweise deren Komponenten, beispielsweise in einem dreidimensionalen kartesischen Koordinatensystem um entlang der drei Achsen und/oder um die drei Achsen erfassen. Auch hier sind beliebige Koordinatensysteme anwendbar.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Draufsicht auf ein erfindungsgemäßes System zum Durchführen des erfindungsgemäßen Verfahrens,
- Fig. 2a bis 2e: schematisch den Aufbau eines Mikrosensors mit Rezeptoren, und
- Fig. 3: schematisch einen Ablauf des erfindungsgemäßen Verfahrens.

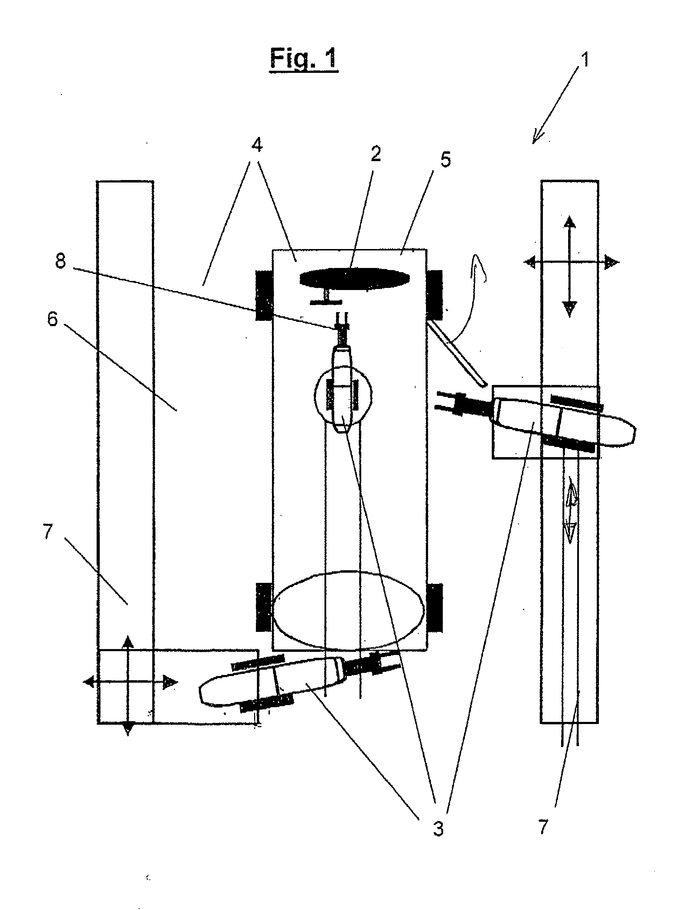

Fig.1 zeigt eine schematische Draufsicht eines Systems 1 zum Durchführen des erfindungsgemäßen Verfahrens zur vollautomatischen Endkontrolle von Bauteilen 2 und dergleichen.

Das System 1 umfasst gemäß Fig. 1 drei Roboter 3. Die Roboter 3 und die zu prüfenden Bauteile sind vor Begin der Endkontrolle in unterschiedlichen Raumstrukturen 4 angeordnet. Eine Raumstruktur 4 ist in diesem Ausführungsbeispiel ein schematisch dargestelltes Kraftfahrzeug 5. In dem Kraftfahrzeug 5 ist ein als Kraftfahrzeugcockpit ausgebildetes Bauteil 2 angeordnet. Außerhalb des Kraftfahrzeugs 5 sind in einer als Prüfraum 6 ausgebildeten anderen Raumstruktur 4 vor Begin der Endkontrolle die Roboter 3 angeordnet.

Die Roboter 3 sind verfahrbar angeordnet, wobei in dem in Fig. 1 dargestellten Zustand des Systems zwei der Roboter 3 außerhalb des Kraftfahrzeugs 5 und einer der Roboter 3 bereits in das Kraftfahrzeug 5 eingefahren dargestellt sind. Zum Verfahren der Roboter 3 sind diese auf entsprechenden Verfahreinrichtungen 7 angeordnet, genauer Verfahrtischen wie - hier vorliegend dargestellt - Kreuztischen. Diese sind bevorzugt als zweiachsige, linear verfahrende Kreuztische ausgebildet. Die Roboter weisen hier nicht explizit dargestellte Messsensoren zum Verarbeiten von Orientierungsdaten auf, anhand derer der Roboter sich in den Raumstrukturen orientieren kann. Die Orientierung im Raum und die Objekterfassung erfolgt über zwei- oder dreidimensionale Sensoren, die endseitig an jedem Roboterarm angeordnet sind. Das Anfahren der Mess-Referenzpunkte erfolgt in Bereich von +/- 2,5 mm.

Jeder Roboterarm trägt ferner eine Prüfvorrichtung 8 zur Durchführung von Einzelkontrollen an einem zu prüfenden Bauteil 2 oder an einer zu prüfenden Komponente. Die Prüfvorrichtung 8 dient dazu, Daten über das zu prüfende Bauteil 2 zu verarbeiten - genauer zu erfassen - und um eine Einzelkontrolle beispielsweise einer Funktionseinheit eines Bauteils durchzuführen und die Resultate der Einzelkontrolle oder das Feedback des Bauteils bei der Einzelkontrolle zu erfassen.

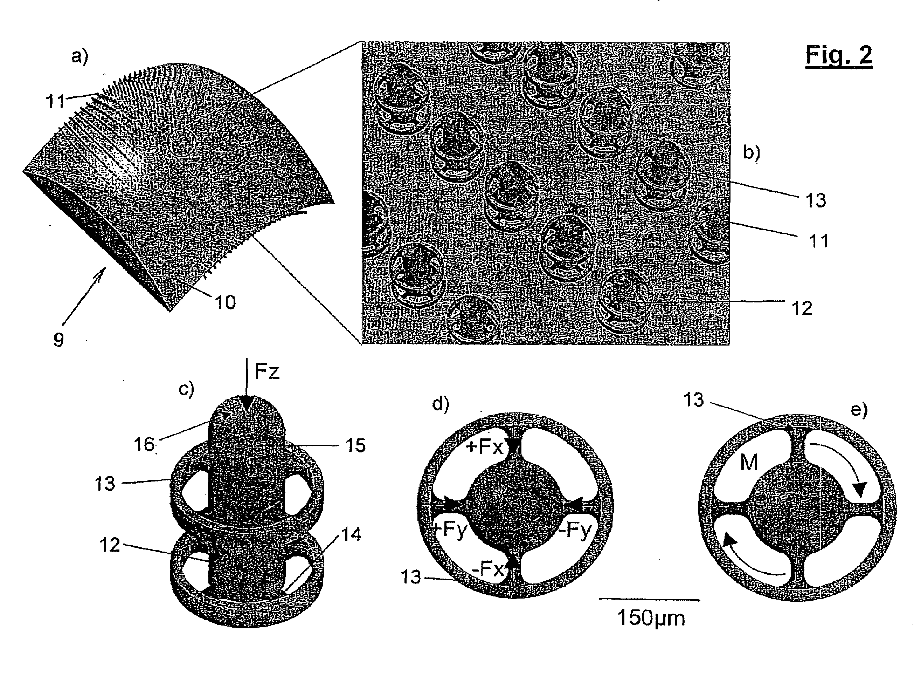

Für die Erfassung des Feedbacks, beispielsweise des haptisch erfassbaren Feedbacks sind besondere Messsensoren erforderlich. Ein Messsensor 9 auch zur haptischen Erfassung ist in den Fig. 2a bis e näher dargestellt.

Fig. 2a zeigt schematisch einen als Mikrosensor ausgebildeten Messsensor 9. Der Mikrosensor ist als dreidimensionaler Mikrosensor ausgebildet, der Oberflächen- und/oder Kraftinformationen über dreidimensionale Bauteile haptisch erfassen kann. Der Mikrosensor weist einen Grundkörper 10 auf, auf dem eine Vielzahl von Rezeptoren 11 ausgebildet und/oder angeordnet ist. Mit dieser Vielzahl an Rezeptoren 11 lässt sich beispielsweise eine dreidimensionale Oberfläche haptisch erfassen, da diese unter anderem wie ein "haptischer Finger" wirken.

Fig. 2b zeigt schematisch einen Ausschnitt des Mikrosensors gemäß Fig. 2a. Hierbei ist die Anordnung und die Ausformung der Rezeptoren 11 dargestellt. Die Rezeptoren 11 sind dabei bevorzugt feldförmig, insbesondere auch in mehreren Reihen nebeneinander angeordnet. Die Form der Rezeptoren 11 ist in etwa vergleichbar mit einer Achse oder Welle 12, die an beiden Enden etwa radförmige Teile 13 aufweist, wobei die Achse oder Welle 12 an einem radförmigen Teil 13 weiter hervorragt, als an dem an dessen anderer Seite angeordneten radförmigen Teil 13. Genauer geht die Ausbildung eines Rezeptors 11 aus Fig. 2c hervor.

Fig. 2c zeigt schematisch vergrößert, in einer perspektivischen Ansicht einen Rezeptor 11 des Mikrosensors. Dabei weisen die radförmigen Teile 13 vier speichenartige Verbindungsbereiche 14 auf, welche mit der Welle 12 verbunden sind. Ein radförmiges Teil 13 schießt etwa bündig mit einem Ende der Welle 12 (oder Achse) ab. Das zweite radförmige Teil 13 ist im Wesentlichen gleich ausgebildet, wie das erste radförmige Teil 13 und weist ebenfalls speichenartige Verbindungsbereiche 14 auf, welche mit der Welle 12 verbunden sind. Das zweite radförmige Teil 13 ist jedoch nicht an dem anderen Ende der Welle 12, sondern weiter mittig angeordnet, so dass ein Bereich der Welle 12 über dieses zweite radförmige Teil 13 herausragt und einen Vorsprungsbereich 15 bildet. Dieser Vorsprungsbereich 15 ist an dessen äußerem Ende abgerundet, wobei der Vorsprungsbereich 15 zumindest teilweise bevorzugt als Thermoelement 16 zum Erfassen von thermischen Informationen ausgebildet ist.

Die Welle 12 oder Achse des Rezeptors 11 ist vorzugsweise als z-Achse ausgebildet. Die vier speichenartigen Verbindungsbereiche 14 sind bevorzugt im Wesentlichen rechtwinklig zueinander angeordnet und bilden korrespondierend paarweise eine x-Achse und eine y-Achse, so dass der Rezeptor 11 Daten erfassen kann, und diese entsprechend des bevorzugt ausgebildeten Koordinatensystems als kartesische Koordinatenkomponenten verarbeiten kann. Die beiden radförmigen Teile 13 sind äußerlich zueinander korrespondierend ausgebildet, weisen jedoch unterschiedliche Funktionen auf.

Fig. 2d zeigt einen der beiden radförmigen Teile 13 schematisch in einer Draufsicht. Dieses radförmige Teil 13 ist als Piezo-Resistor ausgebildet, wobei dieser zum Kräfteerfassen ausgebildet ist. Dabei werden hauptsächlich Kräftekomponenten in +x, -x, +y, -y Richtungen erfasst, gemäß des zugrunde liegenden kartesischen Koordinatensystems, wie zuvor beschrieben. Diese Kräftekomponenten sind in der Fig. durch entsprechende Bezeichnungen +Fx, -Fx, +Fy, -Fy sowie die zugehörigen Pfeile, welche die Kraftvektoren darstellen, gekennzeichnet.

Fig. 2e zeigt das andere der beiden radförmigen Teile 13 schematisch in einer Draufsicht. Auch dieses Teil ist als Piezo-Resistor ausgebildet, jedoch mit dem Unterschied, dass dieser Piezo-Resistor ausgebildet ist, um Momente zu erfassen, insbesondere Drehmomente um die z-Achse, wie durch das M und die gebogenen Pfeile schematisch dargestellt.

Unter den Fig. 2d, 2e ist eine Maßstabseinheit als Linie dargestellt, deren Länge eine wirkliche Länge von etwa 150 µm repräsentiert. Dieser Maßstab ist nur auf die Fig. 2d und 2e anwendbar.

Der in den Fig. 2a bis 2e dargestellte Mikrosensor ist insbesondere zur Verwendung geeignet in den Einsatzbereichen Betätigungshaptik. Berührungshaptik, Nachbildung der Fingerbeere, haptische Wahrnehmung von Oberflächen, intelligente Schalteroberflächen, intelligente Oberflächen, wobei die gesamte Oberfläche auf Berührung eines Menschen reagiert und/oder wobei die Oberflächen sich gemäß Berührungseinflüssen verformen, wodurch sich die Mikrosensoren auch insbesondere zum Fußgängerschutz und zur Airbaganpassung einsetzen lässt.

Der Mikrosensor ist mit seiner Ausbildung und der Vielzahl an Rezeptoren 11 geeignet, um Kräfte in drei Richtungen, Momente in drei Richtungen, sowie die Berührungstemperatur zu messen.

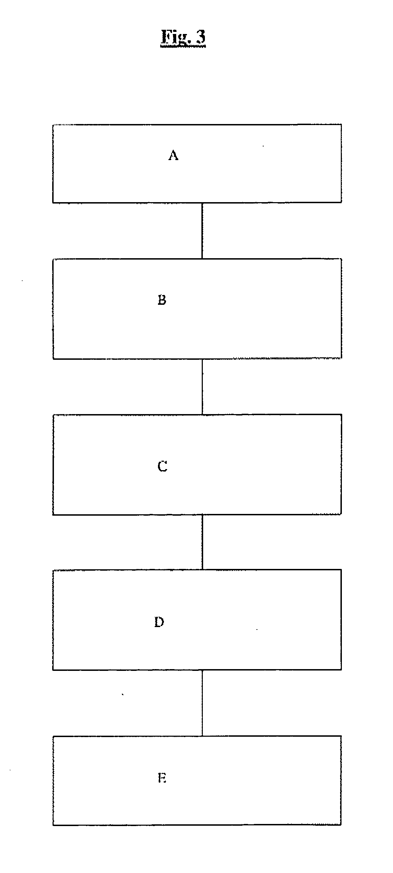

In Fig. 3 ist abstrakt ein Verfahren mit fünf Schritten dargestellt, welches zur vollautomatischen Endkontrolle eingesetzt wird. Die Schritte sind mit den Buchstaben A bis E gekennzeichnet.

Nachdem das zu kontrollierende Objekt, zum Beispiel ein fertig montiertes Kraftfahrzeug in eine Prüfstellung gebracht wurde und gegebenenfalls die Zugangsstelle geöffnet wurde fährt in Schritt A der Roboter, der auf einer Linearachse montiert ist, automatisch in das Kraftfahrzeug hinein.

In Schritt B werden die Informationen über den Prüf- oder Kontrollablauf, welche wie die Soll-Prüfpositionen, bereits offline programmiert bzw. per CAD-Daten festgelegt wurden, abgerufen.

In Schritt C orientiert sich der Roboter in dem Fahrzeugkoordinatennetz und ortet sich dabei automatisch ein bzw. richtet sich selbsttätig aus.

In Schritt D wird nun die IST-Position aus dem programmierten Prüfungsablauf, den CAD-Daten und den Kraftfahrzeugkoordinaten berechnet und die Prüfung bzw. die Durchführung der Kontrolle beginnt. Hierzu werden die entsprechenden Daten in einer Messrobotic verarbeitet.

In Schritt E werden dann die entsprechenden Funktionen des Bauteils oder dessen Funktionseinheiten über die Prüfvorrichtung bzw. den dort ausgebildeten Funktionstester getestet oder kontrolliert. Die einzelnen Fahrzeugkomponenten kommunizieren im Gesamt-Fahrzeugmanagement über ein Fahrzeug-Bus-System, z.B. CAN-, MOST-, LIN-oder Flexray-Busse, und senden ihre Funktionssignale entsprechend der Betätigung durch den Roboter an die übergeordneten Steuergeräte. Nachdem der Roboter den Funktionstest durch Betätigung einer Taste oder eines Reglers eingeleitet hat, wird die Funktions über den mit dem Fahrzeug verbundenen Funktionstester geprüft.

Mit anderen Worten werden in Schritt A Messpunkte für die Bauteile generiert. In Schritt B werden die Fahrzeugkoordinaten verarbeitet. Der Roboter steht nun definiert zu dem Kraftfahrzeug. In Schritt C wird der Offset oder ein Versatz zum Beispiel des Cockpits oder eines Schalters ermittelt, ebenso werden Referenzpunkte im Tastschrittverfahren oder mittels Kraftsensoren ermittelt. In Schritt D erfolgt die Lagevermessung und/oder die Konturerkennung des zu prüfenden einzelnen Bauteils mittels Lichtschnittsensoren oder einem Triangulationsverfahren. Schritt E umfaßt die eigentliche Funktionsprüfung des zu prüfenden Bauteils bzw. der zu prüfenden Komponente.

Die Generierung des gesamten Prüfablaufs kann offline erfolgen, beispielsweise in einem zentralen Büro, und anschließend per eMail oder Datenfernübertragung an jeden beliebigen Produktionsstandort übertragen werden.

Die Erfindung ist nicht auf eine der vorbeschriebenen Ausführungsformen beschränkt, sondern in vielfältiger Weise abwandelbar. Man erkennt aber, daß der Gegenstand der vorliegenden Erfindung ein System 1 und ein Verfahren zur vollautomatischen Endkontrolle von Bauteilen 2 betrifft, insbesondere deren betätigbaren Funktionseinheiten, mit einem Roboter 3 umfassend eine Prüfvorrichtung 8 zum Durchführen der Endkontrolle, umfassend die Schritte: selbsttätiges Ausrichten des Roboters 3 und/oder der Prüfvorrichtung 8 zu dem zu prüfenden Bauteil 2 und/oder dessen Funktionseinheit anhand von Orientierungsdaten, reproduzierbares Durchführen von Einzelkontrollen mittels der Prüfvorrichtung 8, wobei die Schritte selbsttätiges Ausrichten und reproduzierbares Durchführen wiederholt werden, bis ein Abbruchskriterium erfüllt und/oder die Endkontrolle komplett durchgeführt ist

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombination erfindungswesentlich sein.

### Bezugszeichenliste

- 1: System
- 2: Bauteil
- 3: Roboter
- 4: Raumstruktur
- 5: Kraftfahrzeug
- 6: Prüfraum
- 7: Verfahreinrichtungen
- 8: Prüfvorrichtung
- 9: Messsensor
- 10: Grundkörper
- 11: Rezeptor
- 12: Welle
- 13: radförmiges Teil
- 14: speichenartige Verbindungsteile
- 15: Vorsprungsbereich
- 16: Thermoelement

## Patentansprüche

1. Verfahren zur vollautomatischen Endkontrolle von Bauteilen (2), insbesondere deren betätigbaren Funktionseinheiten, mit einem Roboter (3) umfassend eine Prüfvorrichtung (8) zum Durchführen der Endkontrolle, umfassend die Schritte:
■ selbsttätiges Ausrichten des Roboters (3) und/oder der Prüfvorrichtung (8) zu dem zu prüfenden Bauteil (2) und/oder dessen Funktionseinheit anhand von Orientierungsdaten,
■ reproduzierbares Durchführen von Einzelkontrollen mittels der Prüfvorrichtung (8), wobei die Schritte selbsttätiges Ausrichten und reproduzierbares Durchführen wiederholt werden, bis ein Abbruchskriterium erfüllt und/oder die Endkontrolle vollständig durchgeführt ist,
■ wobei das zu prüfende Bauteil (2) und/oder dessen Funktionseinheit und der Roboter (3) in unterschiedlichen, abgegrenzten, über eine Zugangsstelle verbundenen Raumstrukturen (4) angeordnet sind, bevor das Verfahren durchgeführt wird, und
■ wobei weiter die Schritte vorgesehen sind: Auffinden einer Zugangsstelle und Verfahren des Roboters (3) und/oder der Prüfvorrichtung (8) durch die Zugangsstelle, wobei die Schritte Auffinden und Verfahren vor dem Schritt selbsttätiges Ausrichten durchgeführt werden.

2. Verfahren nach Anspruch 1, weiter umfassend den Schritt: Erfassen, Speichern und/oder Abrufen von Orientierungsdaten des Roboters (3), der Prüfvorrichtung (8), des Bauteils (2) und/oder dessen Funktionseinheiten.

3. Verfahren nach Anspruch 1 oder 2, wobei der Schritt selbsttätiges Ausrichten weiter den Schritt: Verfahren (Bewegen) zumindest eines Roboterarms des Roboters (3) und/oder der Prüfvorrichtung (8) zu erfassten und/oder abgerufenen Orientierungsdaten umfasst.

4. Verfahren nach einem der vorherigen Ansprüche 1 bis 3, wobei der Schritt Erfassen und/oder Speichern von Orientierungsdaten des Roboters (3), der Prüfvorrichtung (8), des Bauteils (2) und/oder dessen Funktionseinheiten den Schritt umfasst: Erfassen und/oder Speichern von Orientierungsdaten des Roboters (3), der Prüfvorrichtung (8), des Bauteils (2) und/oder dessen Funktionseinheiten in Bezug auf vorgegebene Orientierungsdaten.

5. Verfahren nach einem der vorherigen Ansprüche 1 bis 4, wobei der Schritt selbsttätiges Ausrichten weiter den Schritt umfasst: Berechnung der Informationen über die mit der Prüfvorrichtung (8) anzufahrende Position für die reproduzierbare Durchführung der Endkontrolle.

6. Verfahren nach Anspruch 5, wobei der Schritt Berechnung der Information über die mit der Prüfvorrichtung (8) anzufahrende Position weiter den Schritt umfasst: Berechnung der Information über die mit der Prüfvorrichtung (8) anzufahrende Position anhand eines Lageerkennungsalgorithmus.

7. Verfahren nach einem der vorherigen Ansprüche 1 bis 6, wobei der Schritt reproduzierbares Durchführen weiter den Schritt umfasst: Berechnen, Erfassen, Speichern und/oder Abrufen der Informationen über das zu prüfende Bauteil (2) oder dessen Funktionseinheit einschließlich der Prüfungsinformationen für die durchzuführende Prüfung.

8. Verfahren nach einem der vorherigen Ansprüche 1 bis 7, wobei der Schritt reproduzierbares Durchführen weiter den Schritt umfasst: Durchführung einer Einzelkontrolle anhand der Prüfungsinformationen.

9. Verfahren nach einem der vorherigen Ansprüche 1 bis 8, wobei der Schritt reproduzierbares Durchführen weiter den Schritt umfasst: Erfassen mindestens einer Information über das Feedback auf die Durchführung der Einzelkontrolle.

10. Verfahren nach einem der vorherigen Ansprüche 1 bis 9, wobei die Informationen einschließlich der Orientierungsdaten des zu prüfenden Bauteils (2) und/oder deren betätigbarer Funktionseinheit und/oder der Prüfungsinformationen in einem Teachingverfahren gewonnen werden.

11. Verfahren nach einem der vorherigen Ansprüche 1 bis 19, weiter umfassend die Schritte:
■ Erfassen der Zugangsstelle und
■ Öffnen der Zugangsstelle, wobei der Schritt Öffnen der Zugangsstelle vor dem Schritt Verfahren des Roboters (3) durch die Zugangsstelle ausgeführt wird.

12. Verfahren nach einem der vorherigen Ansprüche 1 bis 11, wobei der Schritt Erfassen, Speichern und/oder Abrufen des Bauteils (2) das mehrdimensionale Erfassen, Speichern und/oder Abrufen des Bauteils (2) umfassend Bauteile mit Freiformflächen umfasst.
